# EUROPÄISCHE PATENTSCHRIFT

(11) **EP 2 826 353 B1**
(45) Veröffentlichungstag und Bekanntmachung des Hinweises auf die Patenterteilung: **25.05.2016**
(21) Anmeldenummer: 14165849.2
(22) Anmeldetag: 24.04.2014
(51) Int. Cl.: A01C 3/02, E04B 7/08, E04H 7/06

(54) **Abdeckung für Behälter**
Cover for reservoir
Couverture pour réservoir

(43) Veröffentlichungstag der Anmeldung: 21.01.2015
(73) Patentinhaber: AGROTEL GmbH, 94152 Neuhaus/Inn (DE)
(72) Erfinder: Laner, Cyriak, 94152 Neuhaus/Inn (DE)
(74) Vertreter: Prinz & Partner mbB

(56) Entgegenhaltungen:
- EP-A2- 2 095 701
- CH-A5- 687 867
- FR-A- 1 218 029
- NL-A- 8 801 602
- US-A- 3 130 488
- US-A1- 2005 108 956

## Beschreibung

Die Erfindung betrifft ein nachträglich montierbares Dach eines oben offenen Bauwerks, beispielsweise Jauchegruben, Biogasanlagen oder ähnliche oben offene Rundbehälter oder Behälter mit anderen geometrischen Formen, ein selbsttragendes Traggerüst für ein solches Dach sowie ein Verfahren zur Montage eines Daches.

In landwirtschaftlichen Betrieben gibt es nach wie vor zahlreiche oben offene Rundbehälter, wie beispielsweise Jauchegruben. Um die entstehenden Geruchsbelästigung zu reduzieren, will der Gesetzgeber eine verpflichtende Abdeckung von offenen Behältern durchsetzen. Seitens der Landwirte ist eine zuverlässige Abdeckung auch gewünscht, um Regenwasserzutritt zu verhindern, da durch Regenfälle die Jauche verdünnt wird bzw. das Fassungsvermögen darunter leidet, wodurch vermehrt Ausbringungsfahrten notwendig sind, was beides mit Kosten verbunden ist. Des Weiteren soll mit einer Abdeckung das ungewollte Hineinstürzen von Kindern oder Wildtieren verhindert werden, so dass keine Abzäunung notwendig ist, die beim Entleeren entfernt werden muss.

Bis jetzt existieren für dieses Problem im Wesentlichen drei Lösungsansätze.

Einerseits wird mit schwimmenden, geruchsmindernden Bindemitteln gearbeitet, die zwar die Geruchsproblematik verringern, aber betreffend Sicherheit und Regenwasser keine Verbesserung bieten.

Die zweite Lösung sind auf der Jauche schwimmende Abdeckungen, die die Aufgaben einigermaßen erfüllen, jedoch betreffend Sicherheit nur bedingt geeignet sind. Ein weiterer großer Nachteil ist die Verschmutzung dieser Abdeckungen und das relativ aufwändige Entfernen zur Entleerung. Diese Abdeckungen müssen einerseits zur Entleerung, aber auch zum notwendigen Durchmischen der Jauche zumindest teilweise entfernt werden, was mit erheblichem Aufwand verbunden ist.

Der dritte Lösungsansatz besteht aus Folienabdeckungen, welche in der Mitte des Behälters mit einer Stütze abgestützt sind.

Diese Lösungen, wie beispielsweise auch in der DE 3 436 933 A1 offenbart, lösen die Probleme der Sicherheit und der Geruchsbelästigung. Durch die Abstützung in der Mitte ist es jedoch notwendig, den Behälter bei der Errichtung zu entleeren, was betreffend der Zwischenlagerung der in der Bauzeit anfallenden Jauche ein erhebliches Problem darstellt, zumal der Behälter nur in einem relativ kurzen Zeitraum im Jahr entleert werden kann. Weiters sind derartige Behälter meist von der Statik nicht dafür geeignet, in der Mitte eine Abstützung aufzunehmen. Für eine gegebenenfalls erforderliche Verstärkung der Fundamentplatte ist mit einer längeren Errichtungszeit und mit erheblichen Mehrkosten zu rechnen, was auch an dieser Lösung nachteilig ist.

Ein weiterer Nachteil ist, dass die Stütze für Mischaufgaben eventuell hinderlich ist.

Ein selbsttragendes Traggerüst, das keine mittige Stütze benötigt, ist beispielsweise in der US 2005/108956 A1 gezeigt.

Aufgabe der Erfindung ist, ein Dach sowie ein Traggerüst für ein solches Dach zu schaffen, welches vor Ort zusammengebaut und als eine Einheit mittel Hebevorrichtung auf dem Behälter montiert werden kann.

Zur Lösung dieser Aufgabe sind erfindungsgemäß ein selbsttragendes Traggerüst sowie ein Dach mit einem solchen Traggerüst geschaffen, das die Merkmale des Anspruchs 1 bzw. des Anspruchs 6 aufweist. Zur Lösung der Aufgabe ist des Weiteren ein Verfahren nach Anspruch 11 vorgesehen. Vorteilhafte Ausgestaltungen der Erfindung ergeben sich aus den Unteransprüchen.

Der Vorteil des erfindungsgemäßen Dachs und des erfindungsgemäßen Traggerüsts besteht darin, dass das Dach bzw. die Abdeckung demontiert zum Aufstellungsort gebracht werden kann, wodurch sie einfach transportiert werden kann. Dann erfolgt die Montage vor Ort, und das selbsttragende Traggerüst kann mittels eines Krans auf den Behälter aufgesetzt werden, ohne dass der Behälter vorher entleert werden muss oder zusätzliche Baumaßnahmen an diesem durchgeführt werden müssen.

Ein weiterer Vorteil besteht darin, dass Regenwasser gezielt abfließt, im Inneren keine Mischaufgaben behindernden Stützelemente angebracht sind und sich weiterhin ein Schutz gegen Hineinfallen ergibt. Außerdem ist gewährleistet, dass es allenfalls eine geringe Geruchsbelästigung durch den Inhalt gibt.

Das Traggerüst ist im Wesentlichen als selbsttragende Kuppel aus miteinander verbundenen Längs- und Querträgern aufgebaut und mit mindestens einer Abdeckung aus einer vorzugsweise gewebeverstärkten Folie abgedeckt, mit der das Traggerüst ein erfindungsgemäßes Dach bildet.

Die selbsttragende Kuppel ist aus mehreren zumindest einen Knick aufweisenden und die Längsträger in zwei Abschnitte unterteilenden Abschnitten und zur Aussteifung mit mehreren Querträgern aufgebaut. Der Knick in den Längselementen dient dazu, die Abdeckung bzw. die Folie zu überdehnen, damit zu spannen und ein Flattern zu verhindern. Flattern durch Wind würde einerseits ungewünschte Geräusche verursachen, andererseits durch die permanenten Schläge die Folie vorzeitig beschädigen.

Auch eine eventuelle Schneeverfrachtung würde am Knick brechen und somit abrutschen.

Zur Montage und zur Selbstversteifung des Systems sind weiters Querprofile vorgesehen. Die Verbindung erfolgt beispielsweise durch Schrauben oder Verschweißen, wobei für eine einfache Verbindung vor Ort die Schraubverbindung Vorteile hat, auch was den Korrosionsschutz angeht.

Die Anzahl der Längs- und Querprofile kann beliebig gewählt werden, wobei ein maximaler lichter Abstand von 4 Meter für eine gespannte, nicht durchhängende Bespannungsfolie vorteilhaft ist.

Durch die sich selbst aussteifende Konstruktion ist keinerlei Abstützung im Beckeninneren notwendig, was ein Ziel der Erfindung ist.

Zusätzlich kann die Konstruktion, insbesondere die Abdeckung im Bereich des unteren Randes auch mit Augenhaken versehen werden, an denen zusätzlich Zugseile, die die Konstruktion verspannen, befestigt werden können. Sind derartige Zugseile vorhanden, kann die Konstruktion auch an leicht unrunde Querschnitte des Bauwerks angepasst werden, indem gewisse Seile mehr gespannt werden, andere gleichzeitig gelockert werden.

Durch die selbstversteifende Konstruktion ist es möglich, das Traggerüst bzw. das Dach in der Nähe des Bauwerks zusammenzubauen und mittels einer Hebevorrichtung das Dach bzw. das Traggerüst einstückig auf das Bauwerk zu heben, ohne diesen entleeren zu müssen oder auch anderweitig in seiner Nutzung auch nur kurzzeitig gehindert zu sein.

Das Aufsetzen des Daches erfolgt beispielsweise mit einem Kran mit einem 8-fachen Gehänge. An den Längsträger, insbesondere an den radial äußeren Abschnitten, und/oder den Querträger sind dazu vorzugsweise Aufnahmen für ein Krangehänge vorgesehen, wobei die Aufnahmen insbesondere in Umfangsrichtung gleichmäßig verteilt angeordnet sind. Beispielsweise ist an jedem zweiten Längsträger eine Aufnahme vorgesehen. Nach oben stehen die Aufnahmen nicht über die Längsträger bzw. die Querträger vor, so dass ein Spannen der Folie nicht durch diese behindert wird. Die Aufnahmen sind beispielsweise durch Aussparungen in den Längs- oder Querträger gebildet. Werden mehrere Aufnahmen verwendet, hat dies den Vorteil, dass sich das Traggerüst beim Anheben mit einem Kran weniger verformen kann und Pendelbewegungen minimiert werden können. Die Aufnahmen sind vorzugsweise radial außen, also in den radial äußeren Abschnitten angeordnet, so dass Verformungen aufgrund des Eigengewichts während des Anhebens und Aufsetzens sehr gering sind.

Die Montage vor Ort ist deswegen notwendig, da die Bauwerke, beispielsweise Jauchegruben oder Biogasanlagen, üblicherweise einen Durchmesser zwischen 8 und 24 Meter aufweisen und somit ein zusammengebauter Transport des Daches bzw. des Traggerüstes, das somit einen ähnlichen Durchmesser wie das Bauwerk hat, unverhältnismäßig teuer und aufwändig wäre.

Je nach Größe der Kuppel ergibt sich eine unterschiedliche Anzahl an Längs- und Querstreben, welche so ausgewählt wird, dass eine maximale lichte Weite von 4 Metern nicht überschritten wird. Bei der bevorzugten Ausführungsform weist das Dach mit 10 Längs- und 3 Querprofilen auf und ist beispielsweise für einen Durchmesser von ca. 14 Meter geeignet.

Die einzelnen Längsträger laufen zur Spitze auf einen Kreisring zusammen, auf dem jeweils Befestigungselemente zum Verschrauben vorgesehen sind. Zur Behälterseite sind die Längsträger mit einem Auflageschuh versehen, der eine vorzugsweise abgewinkelte, erfindungsgemäß L-förmige oder U-förmige Auflagefläche aufweist, die am Bauwerkrand aufliegen kann. Die Verbindung zum Auflageschuh kann bevorzugt über eine Lasche an diesem erfolgen.

Die Befestigung mittels der Laschen kann auch für die Befestigung an der Spitze wie auch für die Querträger verwendet werden. Die Befestigung zwischen Längsträger und Auflageschuh kann in einer Ausführungsvariante auch verstellbar ausgeführt sein, sodass Unrundigkeiten des Behälters durch diese Verstellung ausgeglichen werden können. Diese Verstellung kann bevorzugt über verschiedene Schraublöcherpositionen oder auch über Langlöcher erzielt werden.

Der Auflageschuh selbst kann entweder nur am Bauwerksrand aufliegen, was durch eine bevorzugt L-förmige Ausgestaltung begünstigt wird, aber auch am Bauwerk verschraubt werden.

Das selbstversteifende Traggerüst ist zumindest außen mit einer Folie abgedeckt, die die Abdeckung realisiert. Dies ist bevorzugt eine gewebeverstärkte Folie aus PP, PE oder PVC. Die Folie wird am Bauwerk oder an einem Fundament verspannt und damit befestigt. Es kann auch eine Befestigung am Traggerüst erfolgen, ist aber nicht zwingend notwendig.

Zusätzlich zur äußeren Folie kann die Abdeckung auch an der Innenseite eine Folie aufweisen, die am Traggerüst befestigt werden kann und die das Traggerüst gegen aggressive Dämpfe und damit eine Korrosionsgefahr schützt. Die Korrosion kann aber auch durch geeignete Beschichtungen verhindert werden.

Die Abdeckung läuft zur Spitze hin konisch zu, kann aber in einem kleinen Kreis offen sein, damit im Inneren des Bauwerks entstehende Dämpfe entweichen können. Dazu ist die Spitze der Abdeckung mit einer Lüftungseinheit versehen, die Regenwassereintritt verhindert und die Geruchsbelästigung minimiert, aber einen eventuell entstehenden Überdruck gezielt ableitet. Die Ausführung kann ähnlich eines Kamindaches sein.

Ist eine absolute Geruchsdichtigkeit erforderlich, kann diese auch als Siphon mit einer Wasserfüllung ausgeführt sein. Zur Konstanthaltung eines gewissen Wasserstands kann hier auch gezielt der anfallende Niederschlag gesammelt werden.

Die Abdeckung liegt am Traggerüst auf und ist, wie bereits beschrieben, am Bauwerk verspannt. Diese Abdeckung kann aus mehreren konfektionierten Folienstücken bestehen und für jeden Rahmen individuell gefertigt werden. Die Abdeckung kann durchgehend geschlossen sein, sodass bei der Entleerung oder beim Durchmischen diese eventuell geöffnet werden muss.

In einer weiteren Ausführungsform weist diese eine bereits vorkonfektionierte Öffnung auf, welche mittels einer Aufrollvorrichtung den zu öffnenden Teil freigibt und über Schienen geführt ist. Somit kann dieser Öffnungsbereich ähnlich eines Folienrolladens ausgeführt sein, was ein sauberes Öffnen und Schließen erlaubt.

Das Dach bzw. das Traggerüst ist für alle oben offenen, vorzugsweise runden Bauwerke geeignet, wobei bevorzugt die beschriebene Variante als Dach für Jauchegruben oder andere, beispielsweise in der Landwirtschaft verwendete oben offene Behälter angedacht ist. Weiters können aber auch Biogasanlagen, Industriebehälter generell, Schwimmbäder, Pferdetreibgänge, Pavillons etc. damit abgedeckt werden. Besonders vorteilhaft ist hier die nachträgliche Anbringung an bereits errichteten Behältern, da diese auch während der Errichtung des Daches bzw. des Traggerüstes uneingeschränkt genutzt werden können und keine zusätzlichen Baumaßnahmen an den Behältern notwendig sind.

Ebenso bietet das Dach zuverlässigen Schutz gegen auftretende Geruchsbelästigung, gegen die Ansammlung von Regenwasser und unbeabsichtigtes Hineinfallen.

Weitere Vorteile und Merkmale ergeben sich aus der nachfolgenden Beschreibung in Verbindung mit den beigefügten Zeichnungen. In diesen zeigen:
- Figur 1 eine Seitenansicht eines Bauwerks mit einem erfindungsgemäßen Dach,
- Figur 2 eine Draufsicht auf das Bauwerk aus Figur 1,
- Figur 3 eine Detailansicht des Traggerüsts des Daches aus Figur 1,
- Figur 4 eine Schnittansicht des Traggerüsts des Daches aus Figur 1.

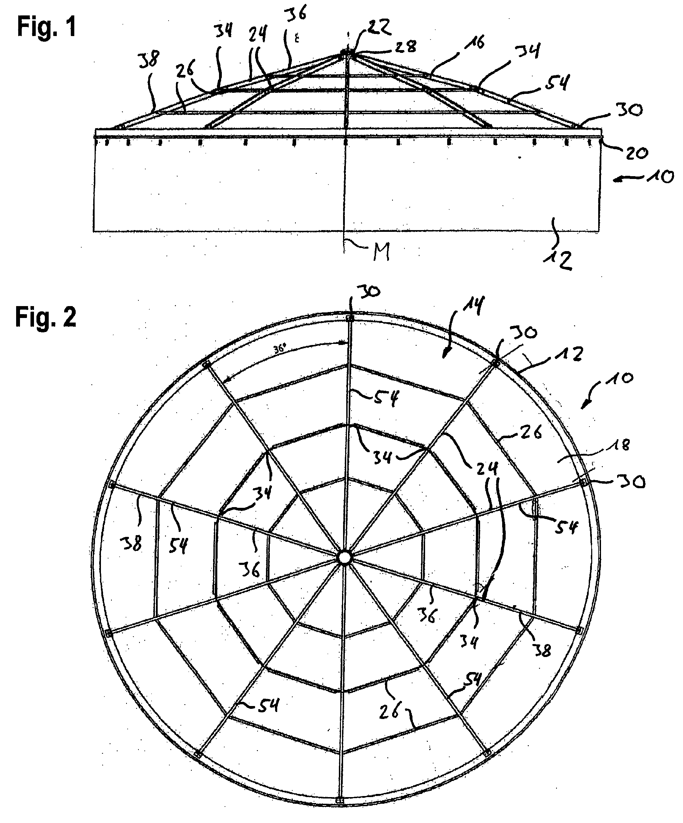

In den Figuren 1 und 2 ist ein oben offenes Bauwerk 10 gezeigt, das eine umlaufende Wand 12 aufweist. Das Bauwerk 10 ist ein einfacher Rundbehälter, beispielsweise für eine Jauchegrube oder eine Biogasanlage. Nach oben hin ist dieses Bauwerk 10 offen ausgebildet.

Um das Bauwerk 10 nach oben hin abzuschließen, ist auf dieses ein selbsttragendes Dach 14 aufgesetzt, das aus einem Traggerüst 16 sowie einer Abdeckung 18 besteht.

Das Dach 14 bietet einerseits einen Emissionsschutz. Andererseits wird der Inhalt des Bauwerks 10 vor Witterungseinflüssen, beispielsweise Regen, geschützt, so dass beispielsweise durch eindringendes Regenwasser der Inhalt nicht verwässert oder der Behälter unnötig gefüllt wird. Zudem verhindert das Dach 14 das ungewollte Hineinstürzen von Personen oder Tieren.

Üblicherweise weisen bestehende Bauwerke, insbesondere in der Landwirtschaft, keine Überdachung auf. Ein nachträgliches Anbringen eines Emissionsschutzes oder eine Schutzes gegen Hineinfallen, ist aber meist mit größeren Schwierigkeiten verbunden.

Der Durchmesser solcher Behälter beträgt üblicherweise zwischen 8 und 26 m, sodass ein einfaches Überspannen mit einer Plane oder Folie nicht möglich ist. Eine Anordnung einer Stütze oder eines Mastes in der Mitte ist ebenfalls nicht möglich, da dazu einerseits das vollständige Entleeren des Behälters erforderlich wäre. Andererseits weisen die Bauwerke 10 häufig ein Rührwerk auf, mit dem der Inhalt des Behälters durchmischt werden kann und dessen Bewegung durch einen solchen Mast behindert werden würde. Zudem ist die Betonsohle solcher Bauwerke oft nicht für eine punktuelle Belastung in der Mitte, wie sie durch eine Stütze entstehen würde, ausgelegt.

Aus diesem Grund ist ein Dach 14 mit einem selbsttragenden Traggerüst 16 vorgesehen, die sich lediglich am Rand 20 des Bauwerks 10 abstützt und das, wie nachfolgend erläutert wird, vor Ort aus mehreren einfach zu transportierenden Bauteilen zusammengesetzt werden kann. Da das Traggerüst 16 vollkommen selbsttragend ist und vor Ort zusammengebaut werden kann, ist eine einfache Anlieferung des Daches 14 möglich. Anschließend kann das Dach 14 vor Ort zusammengebaut werden und, beispielsweise mittels eines Krans, in montiertem Zustand auf das Bauwerk 10 aufgesetzt werden.

Dadurch ist es weder erforderlich, den Inhalt des Bauwerks 10 zu entleeren und den Behälter zu säubern noch zusätzliche Abstützungen im Inneren des Bauwerks 10 vorzusehen. Der Betrieb des Bauwerk 10 ist während des Errichten des Daches 14 also nicht oder nur unwesentlich eingeschränkt.

Wie in den Figuren 1 und 2 zu sehen ist, weist das Traggerüst mehrere, sich radial von einem Mittelpunkt 22 nach außen erstreckende Längsträger 24 sowie im Wesentlichen in Umfangsrichtung angeordnete Querträger 26 auf.

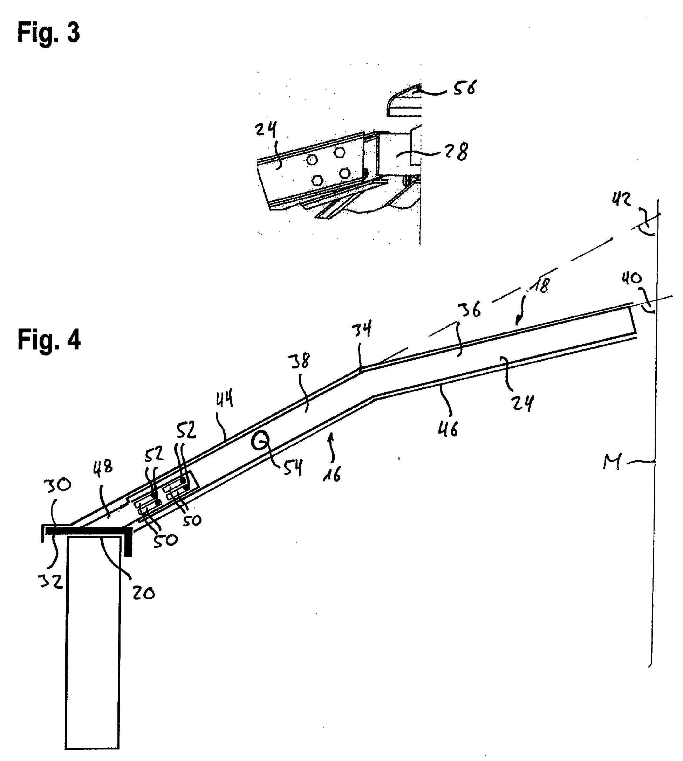

Die Längsträger erstrecken sich vom Mittelpunkt 22 bis zum Rand 20 des Bauwerks 10 und liegen an diesem auf. Im Mittelpunkt 22 ist beispielsweise ein Kreisring 28 vorgesehen, an dem die Längsträger 24 befestigt, beispielsweise verschraubt, sind (siehe Figur 3).

Die Querträger 26 versteifen das Traggerüst 16, indem diese jeweils zwischen zwei Längsträgern 24 angeordnet und mit diesen verbunden sind. Auch diese Verbindung erfolgt vorzugsweise mittels einer Verschraubung, sodass eine einfache und schnelle Montage möglich ist.

Alternativ können die Längs- und Querträger 24, 26 auch miteinander verschweißt werden. Es kann auch ein anderes Verbindungsverfahren gewählt werden, das eine schnelle und einfache Verbindung der Längs- und Querträger 24, 26 vor Ort ermöglicht.

An den entgegengesetzten, radial äußeren Enden der Längsträger sind Auflageschuhe 30 vorgesehen, mit denen die Längsträger 24 auf den Rand 20 des Bauwerks 10 aufgelegt sind. Die Auflageschuhe 30 weisen eine L-förmige Auflagefläche 32 auf, die am Rand 20 der Wand 12 und mit dem abgewinkelten Schenkel an der Innenseite des Bauwerks 10 aufliegen kann. Dadurch ist ein Herunterrutschen verhindert. Alternativ sind erfindungsgemäß auch U-förmige Auflageflächen denkbar.

Wie in Figur 4 zu sehen ist, sind die Auflageschuhe 30 begrenzt beweglich bzw. verschiebbar am Längsträger 24 befestigt sind, sodass durch eine Verstellung der Auflageschuhe 30 eine Anpassung an ein gegebenenfalls nicht vollständig rundes Bauwerk 10 und/oder einen nicht ganz ebenen Rand 20 möglich ist. Dazu ist am Auflageschuh 30 eine Lasche 48 vorgesehen, die mehrere Langlöchern 50 aufweist, in die am Längsträger 24 vorgesehene Schrauben 52 ragen. Die Lasche 48 und somit der Auflageschuhe 30 können so begrenzt gegen den Längsträger 24 bewegt werden. Ist die endgültige Position des Auflageschuhs 30 erreicht, kann diese mit Hilfe der Schrauben 52 fixiert werden.

Alternativ kann der Auflageschuh 30 auch auf andere Weise am Längsträger 24 gelagert sein. Insbesondere ist es denkbar, dass durch die Lagerung eine separate horizontale und vertikale Verschiebung des Auflageschuhs 30 möglich ist, so dass eine noch bessere Anpassung an die Form des Randes 20 bzw. der Wand 12 erfolgen kann. Statt der gezeigten Schrauben 52 sind auch andere Fixiereinrichtungen denkbar, die die Auflageschuhe 30 in der eingestellten Position fixieren.

In vollständig montiertem Zustand ist das Traggerüst 16 vollkommen selbsttragend und kann mit einem Kran angehoben und auf das Bauwerk 10 aufgesetzt werden.

Des Weiteren weist das Dach 14 eine Abdeckung 18 auf, die in dieser Ausführungsform durch eine außen aufliegende Folie 44, beispielsweise eine Gewebeplane, gebildet ist. Die Folie 44 wird beispielsweise außenseitig auf die Längsträger 24 und die Querträger 26 aufgelegt und mit am Rand der Folie 44 mit einem Abspannrohr und Edelstahlratschen am Rand 20 des Bauwerks 10 oder an einem angrenzenden Fundament verspannt. Zusätzlich ist eine Befestigung an den Längs- und Querträgern 24, 26 möglich. Die Folie 44 wird außerhalb des Behälters aufgebracht und vorgespannt.

Wie insbesondere in Figur 1 zu sehen ist, ist an den Längsträgers 24 mittig ein Knick 34 vorgesehen, durch den die Längsträger 24 jeweils in einen ersten Abschnitt 36 und einen zweiten Abschnitt 38 unterteilt sind. Der Winkel 40, den der radial innen liegende erste Abschnitt 36 mit der Mittelachse M einschließt, ist größer als der Winkel 42, den der radial außen liegende Abschnitt 38 mit der Mittelachse M einschließt. Die Neigung des ersten Abschnittes 36 ist also flacher als die Neigung des zweiten Abschnittes 38.

Durch diesen Knick 34 ist die Umhüllende des Traggerüsts 16 somit nicht konusförmig, sondern leicht kuppelförmig. Dies führt dazu, dass die Folie 44, insbesondere im radial äußeren Bereich der zweiten Abschnitte 38, besser gespannt werden kann und somit faltenfrei auf dem Traggerüst 16 aufliegen kann.

Auch eine eventuelle Schneeverfrachtung würde an diesem Knick 34 brechen und abrutschen.

Um ein noch besseres Verspannen der Folie 44 zu erzielen, ist es auch möglich, dass bei größeren Durchmessern mehrere Knicke vorgesehen sind, die die Längsträger 24 in radialer Richtung in mehrere Abschnitte unterteilen. Die Winkel, die die Abschnitte mit der Mittelachse M einschließen, werden dabei von radial innen nach außen jeweils flacher, haben also von radial innen nach außen eine zunehmende Neigung, sodass das Traggerüst 16 kuppelförmig ausgebildet ist.

Zusätzlich kann die Abdeckung 18 eine zweite Folie 46 aufweisen, die innenseitig am Traggerüst 16 befestigt ist. Diese zweite Folie 46 schützt das Traggerüst 16, das üblicherweise aus verzinkten Stahlträgern, insbesondere herkömmlichen I-Trägern, gefertigt ist, vor aggressiven Gasen, die sich im Inneren des Bauwerks 10 entwickeln können. Alternativ oder ergänzend ist es auch denkbar, dass die Längs- und Querträger 24, 26 mit einem zusätzlichen Korrosionsschutz, beispielsweise einer Beschichtung, versehen sind.

Durch das Dach 14 bzw. die Abdeckung 18 können Dämpfe oder Gerüche nur geringfügig aus dem Inneren des Bauwerks 10 entweichen, sodass ein zuverlässiger Schutz der Umgebung vor den entstehenden Gerüchen möglich ist und die Emissionsschutzvorgaben eingehalten werden.

Die im Inneren des Behälters entstehenden Dämpfe und Gerüche werden gezielt am höchsten Punkt des Daches 14 mit einer als Kaminkopf 56 ausgebildeten Öffnung (siehe Figur 3) abgeleitet. Durch eine solche Belüftungseinheit ist zudem das Entstehen eines Überdrucks im Bauwerk 10 zuverlässig verhindert.

Die Belüftungseinheit kann beispielsweise als Kamin ausgebildet sein. Um einen besseren Schutz vor den entstehenden Gerüchen zu gewährleisten, kann aber auch ein Siphon vorgesehen sein, der eine Wasserfüllung aufweist. Die Füllung des Wassers kann beispielswese auch durch Regenwasser erfolgen. Zusätzlich kann die Belüftungseinrichtung auch einen Filter aufweisen.

Die Folien 44, 46 der Abdeckung 18 werden einstückig gefertigt sein. Die Folien 44, 46 werden jeweils aus mehreren Teilen zusammengeschweißt. In dieser Dachhaut können Öffnungen und Luken eingearbeitet werden, um ein Entleeren und Rühren zu ermöglichen.

In jedem Fall ist das Traggerüst 16 bzw. das Dach 14 mit einem solchen Traggerüst 16 selbsttragend und kann vor Ort montiert und in vollständig montiertem Zustand auf das Bauwerk 10 aufgesetzt werden. Am Bauwerk 10 selbst sind allenfalls an der umhüllenden Wand 12 Vorkehrungen zu treffen, um die Auflageschuhe 30 auf den Rand 20 auflegen bzw. an diesem befestigen zu können. Ein Zugang zum Innenraum des Bauwerks 10, beispielsweise zur Anordnung von Stützen oder zur Montage des Daches 14 oder des Traggerüstes 16, ist nicht erforderlich.

Wie in den Figuren 2 und 4 zu sehen ist, sind zum Aufsetzen des Daches bzw. des Traggerüstes auf den Behälter an den Längsträger 24 im Bereich der radial äußeren Abschnitte 38 Aufnahmen 54 für ein Krangehänge vorgesehen. Diese Aufnahmen 54 sind durch Aussparungen an den Längsträger 24 gebildet, die eine Befestigung des Krangehänges, beispielsweise mittels Schäkeln ermöglichen.

Vorzugsweise ist mindestens an jedem zweiten Längsträger 24 eine Aufnahme vorgesehen, so dass das Traggerüst 16 bzw. das Dach 14 mit einem Mehrfachgehänge, beispielsweise einem 8-fach-Gehänge angehoben und auf den Behälter 10 aufgesetzt werden kann.

Die Anordnung der Aufnahmen 54 in den radial äußeren Abschnitten 38 hat den Vorteil, dass sich das Dach 14 bzw. das Traggerüst 16 aufgrund des Eigengewichts weniger verformen kann. Ein Anheben des Daches 14 bzw. des Traggerüstes 16 beispielsweise im Mittelpunkt 22 wäre prinzipiell möglich, würde aber zu einer stärkeren Verformung führen, wodurch das Aufsetzen auf den Behälter 10 bzw. das Anpassen an den Rand 20 der Wand 12 schwieriger wäre.

Zum Aufsetzen des Daches 14 wird die Folie 44 des vormontierten Daches 14 so weit radial nach innen zurückgeschlagen, dass die Aufnahmen 54 frei zugänglich sind. Anschließend wird das Krangehänge am Traggerüst 16 befestigt und das Dach 14 auf den Behälter 10 gehoben. Anschließend kann das Krankgehänge entfernt und die Folie 44 wieder vollständig auf dem Traggerüst 16 gespannt werden. Die verwendeten Folien 44 erlauben auch während der Montagephase ein Begehen des Daches, da die Folie 44 ausreichend tragfähig ist.

## Patentansprüche

1. Selbsttragendes Traggerüst (16) für ein selbsttragendes Dach (14) eines oben offenen Bauwerks (10), zum Beispiel eines Behälters einer Biogasanlage oder eines Jauchebehälters, mit mehreren, sich von einer Mittelachse (M) des Bauwerks (10) radial weg erstreckenden Längsträgern (24) sowie mehreren Querträgern (26), die sich zwischen den Längsträgern (24) im Wesentlichen in Umfangsrichtung erstrecken und mit diesen verbunden sind, wobei die Längs- und Querträger (24, 26) verbunden sind und die Längsträger (24) an den radial äußeren Enden Auflageschuhe (30) für das Bauwerk (10) aufweisen, **dadurch gekennzeichnet, dass** die Auflageschuhe (30) L-förmige oder U-förmige Auflageflächen (32) für das Bauwerk (10) aufweisen.

2. Traggerüst nach Anspruch 1, **dadurch gekennzeichnet, dass** die Längsträger (24) in radialer Richtung zumindest zwei Abschnitte (36, 38) aufweisen, wobei ein radial innenliegender Abschnitt (36) einen größeren Winkel mit der Mittelachse (M) einschließt als ein radial außen liegender Abschnitt (38), sodass der Längsträger (24) zwischen dem ersten und dem zweiten Abschnitt (36, 38) einen Knick (34) aufweist.

3. Traggerüst nach Anspruch 1 oder 2, **dadurch gekennzeichnet, dass** zumindest ein Querträger (26) im Bereich des Knickes (34) vorgesehen ist.

4. Traggerüst nach einem der vorhergehenden Ansprüche, **dadurch gekennzeichnet, dass** die Auflageschuhe (30) begrenzt beweglich und/oder verschiebbar an den Enden der Längsträger (24) befestigt sind, wobei eine Fixiereinrichtung vorgesehen ist, um die Position der Auflageschuhe (30) am Längsträger (24) festzulegen.

5. Traggerüst nach einem der vorhergehenden Ansprüche, **dadurch gekennzeichnet, dass** an den Längsträger (24), insbesondere an den radial äußeren Abschnitten (38), und/oder den Querträger (26) Aufnahmen (54) für ein Krangehänge vorgesehen ist, wobei die Aufnahmen (54) insbesondere in Umfangsrichtung gleichmäßig verteilt angeordnet sind.

6. Selbsttragendes Dach (14) für ein oben offenes Bauwerk (10), zum Beispiel einen Behälters einer Biogasanlage oder einen Jauchebehälter, mit einem Traggerüst (16) nach einem der vorhergehenden Ansprüche und einer Abdeckung (18), die eine erste Folie aufweist, die außenseitig über das Traggerüst (16) gelegt und an diesem befestigt ist.

7. Dach nach Anspruch 6, **dadurch gekennzeichnet, dass** die Abdeckung (18) eine zweite Folie aufweist, die innenseitig am Traggerüst befestigt ist.

8. Dach nach Anspruch 6 oder Anspruch 7, **dadurch gekennzeichnet, dass** die Abdeckung (18) zumindest eine Belüftungseinheit aufweist.

9. Dach nach Anspruch 8, **dadurch gekennzeichnet, dass** die Belüftungseinheit als Kaminkopf (56) ausgeführt ist oder alternativ einen Siphon aufweist.

10. Dach nach einem der Ansprüche 6 bis 9, **dadurch gekennzeichnet, dass** die Folien aus mehreren Folienstücken bestehen, wobei zwischen den Folienstücken Öffnungsbereiche vorgesehen sind.

11. Verfahren zur Montage eines Daches (14) nach einem der Ansprüche 6 bis 10 auf einem oben offenen Bauwerk (10), zum Beispiel einem Behälter einer Biogasanlage oder einem Jauchebehälter, mit folgenden Schritten:
- Das Traggerüst (16) wird vormontiert,
- Die Abdeckung (18) wird am Traggerüst montiert,
- Das vormontierte Dach wird, insbesondere mittels einer Hebeeinrichtung, auf das Bauwerk (10), insbesondere auf den oberen Rand (20) der Außenwand (12), aufgesetzt.

## Claims

1. A self-supporting support framework (16) for a self-supporting roof (14) of a structure (10) that is open at the top, for example of a tank of a biogas plant or of a liquid manure tank, comprising a plurality of longitudinal beams (24) extending radially away from a central axis (M) of the structure (10) and a plurality of cross beams (26) that extend substantially in the circumferential direction between the longitudinal beams (24) and are connected therewith, the longitudinal and cross beams (24, 26) being connected and the longitudinal beams (24) including supporting shoes (30) for the structure (10) at the radially outer ends, **characterized in that** the supporting shoes (30) include L-shaped or U-shaped bearing surfaces (32) for the structure (10).

2. The support framework according to claim 1, **characterized in that** the longitudinal beams (24) include at least two sections (36, 38) in the radial direction, a radially inner section (36) including a larger angle with the central axis (M) than a radially outer section (38), so that the longitudinal beam (24) has a bend (34) between the first and second sections (36, 38).

3. The support framework according to claim 1 or 2, **characterized in that** at least one cross beam (26) is provided in the area of the bend (34).

4. The support framework according to any of the preceding claims, **characterized in that** the supporting shoes (30) are fastened to the ends of the longitudinal beams (24) for limited movement and/or displacement, a fixing means being provided for fixing the position of the supporting shoes (30) at the longitudinal beam (24).

5. The support framework according to any of the preceding claims, **characterized in that** the longitudinal beams (24), in particular the radially outer sections (38), and/or the cross beams (26) have retainers (54) provided thereon for a crane suspension gear, the retainers (54) being more particularly arranged so as to be uniformly distributed in the circumferential direction.

6. A self-supporting roof (14) for a structure (10) that is open at the top, for example a tank of a biogas plant or a liquid manure tank, comprising a support framework (16) according to any of the preceding claims and a cover (18) which includes a first sheet that is placed over the support framework (16) on the outside and fastened thereto.

7. The roof according to claim 6, **characterized in that** the cover (18) includes a second sheet that is fastened to the support framework on the inside.

8. The roof according to claim 6 or claim 7, **characterized in that** the cover (18) includes at least one ventilation unit.

9. The roof according to claim 8, **characterized in that** the ventilation unit is configured as a chimney top (56) or, alternatively, includes a siphon trap.

10. The roof according to any of claims 6 to 9, **characterized in that** the sheets consist of a plurality of sheet pieces, with opening areas being provided between the sheet pieces.

11. A method of mounting a roof (14) according to any of claims 6 to 10 on a structure (10) that is open at the top, for example a tank of a biogas plant or a liquid manure tank, comprising the following steps:
- the support framework (16) is preassembled;
- the cover (18) is mounted to the support framework;
- the preassembled roof is placed onto the structure (10), in particular onto the upper edge (20) of the outer wall (12), in particular by means of a lifting device.

## Revendications

1. Charpente de support (16) autoporteuse pour un toit autoporteur (14) d'une construction (10) ouverte en haut, par exemple d'un réservoir d'une installation de biogaz ou d'un réservoir à purin, comportant plusieurs poutres longitudinales (24) qui s'étendent radialement en éloignement d'un axe médian (M) de la construction (10), et plusieurs poutres transversales (26) qui s'étendent sensiblement dans le sens circonférentiel entre les poutres longitudinales (24) et sont reliées à celles-ci, les poutres longitudinales et transversales (24, 26) étant reliées et les poutres longitudinales (24) présentant aux extrémités radialement extérieures des patins de support (30) pour la construction (10), **caractérisée en ce que** les patins de support (30) présentent des surfaces d'appui (32) en forme de L ou en forme de U pour la construction (10).

2. Charpente de support selon la revendication 1, **caractérisée en ce que** les poutres longitudinales (24) présentent dans le sens radial au moins deux tronçons (36, 38), un tronçon radialement intérieur (36) renfermant un angle plus grand avec l'axe médian (M) qu'un tronçon radialement extérieur (38) de sorte que la poutre longitudinale (24) présentant un coude (34) entre le premier et le deuxième tronçon (36, 38).

3. Charpente de support selon la revendication 1 ou 2, **caractérisée en ce qu'**il est prévu au moins une poutre transversale (26) dans la zone du coude (34).

4. Charpente de support selon l'une des revendications précédentes, **caractérisée en ce que** les patins de support (30) sont fixés aux extrémités des poutres longitudinales (24) avec mobilité et/ou déplacement limité(e), un moyen de fixation étant prévu pour déterminer la position des patins de support (30) sur la poutre longitudinale (24).

5. Charpente de support selon l'une des revendications précédentes, **caractérisée en ce que** des logements (54) pour une suspension de grue sont prévus sur les poutres longitudinales (24), en particulier sur les tronçons radialement extérieurs (38), et/ou sur les poutres transversales (26), les logements (54) étant en particulier agencés de manière à être régulièrement répartis dans le sens périphérique.

6. Toit autoporteur (14) pour une construction (10) ouverte en haut, par exemple un réservoir d'une installation de biogaz ou un réservoir à purin, comportant une charpente de support (16) selon l'une des revendications précédentes et un recouvrement (18) qui comporte une première feuille qui est placée du côté extérieur sur la charpente de support (16) et est fixée à celle-ci.

7. Toit selon la revendication 6, **caractérisé en ce que** le recouvrement (18) comporte une deuxième feuille qui est fixée à la charpente de support du côté intérieur.

8. Toit selon la revendication 6 ou la revendication 7, **caractérisé en ce que** le recouvrement (18) présente au moins une unité de ventilation.

9. Toit selon la revendication 8, **caractérisé en ce que** l'unité de ventilation est réalisée sous forme de tête de cheminée (56) ou présente en alternative un siphon.

10. Toit selon l'une des revendications 6 à 9, **caractérisé en ce que** les feuilles sont composées de plusieurs pièces de feuille, des zones d'ouverture étant prévues entre les pièces de feuille.

11. Procédé de montage d'un toit (14) selon l'une des revendications 6 à 10 sur une construction (10) ouverte en haut, par exemple un réservoir d'une installation de biogaz ou un réservoir à purin, comprenant les étapes suivantes :
- la charpente de support (16) est pré-montée,
- le recouvrement (18) est monté sur la charpente de support,
- le toit pré-monté est placé sur la construction (10), en particulier sur le bord supérieur (20) de la paroi extérieure (12), en particulier au moyen d'un dispositif de levage.
